Europäisches Patentamt

European Patent Office

Office européen des brevets

(19)

(11) Veröffentlichungsnummer: **0 249 054**
**B1**

(12) **EUROPÄISCHE PATENTSCHRIFT**

(45) Veröffentlichungstag der Patentschrift: **14.03.90**

(51) Int. Cl.⁵: **B 29 B 7/76**

(21) Anmeldenummer: **87107149.4**

(22) Anmeldetag: **18.05.87**

(54) **Vorrichtung zum Herstellen eines massiven oder geschäumten Kunststoff bildenden Reaktionsgemisches aus fliessfähigen Komponenten.**

(30) Priorität: **31.05.86 DE 3618395**

(43) Veröffentlichungstag der Anmeldung:
**16.12.87 Patentblatt 87/51**

(45) Bekanntmachung des Hinweises auf die Patenterteilung:
**14.03.90 Patentblatt 90/11**

(84) Benannte Vertragsstaaten:
**DE FR GB IT**

(56) Entgegenhaltungen:
**DE-A-3 011 132**
**DE-A-3 301 911**
**DE-A-3 340 889**

(73) Patentinhaber: **MASCHINENFABRIK HENNECKE GMBH**
**Postfach 1180**
**D-5204 St. Augustin 1 (DE)**

(72) Erfinder: **Sulzbach, Hans-Michael**
**Hermann-Löns-Strasse 12**
**S-5330 Königswinter 21 (DE)**

(74) Vertreter: **Müller, Heinz-Gerd, Dipl.-Ing. et al**
**BAYER AG Konzernverwaltung RP**
**Patentabteilung**
**D-5090 Leverkusen 1, Bayerwerk (DE)**

EP 0 249 054 B1

Courier Press, Leamington Spa, England.

**Beschreibung**

Die Erfindung betrifft eine Vorrichtung zum Herstellen eines massiven oder geschäumten Kunststoff bildenden Reaktionsgemisches aus fließfähigen Komponenten, bestehend aus einem Gehäuse mit einer darin angeordneten Führungsbohrung für einen Ausstoßkolben, wobei Zuleitungen mit Eintrittsöffnungen und Rückführleitungen vorgesehen sind; und aus einem Drehschieber, welcher eine vom Ausstoßkolben durchfahrbare Mischkammer enthält und aus einer die Eintrittsöffnungen zur Mischkammer freigebenden in eine die Eintrittsöffnungen über im Drehschieber angeordnete Überströmkanäle mit den Rückführleitungen verbindende Stellung bewegbar ist.

Die Vorrichtung der eingangs genannten Art (DE—OS 33 01 911) besitzt einen Drehschieber, dessen Achse mit derjenigen der Mischkammer zusammenfällt, wobei die Mischkammer im Drehschieber zentrisch angeordnet ist. Dieser die Form einer Hülse besitzende Drehschieber weist Einspritzkanäle auf, welche durch entsprechendes Verdrehen mit den Zuleitungen zur Deckung gebracht werden können. Diese Einspritzkanäle müssen mit einem aufwendigen Austoßmechanismus nach Ende des Mischvorganges gereinigt werden. Die zugehörige Steuerung ist sehr aufwendig. Ein gravierender Nachteil dieser Vorrichtung besteht darin, daß die Mischkammer wie bei einem gewöhnlichen Ausstoßkolbenmischkopf zum Auslauf hin völlig offen ist und deshalb für schwerer vermischbare Komponenten nicht geeignet ist.

Es besteht die Aufgabe, eine Vorrichtung der eingangs genannten Art zu schaffen, welche weniger aufwendig ist und auch für anspruchsvolle Mischaufgaben geeignet ist.

Diese Aufgabe wird dadurch gelöst, daß der Drehschieber unter einem Winkel zur Führungsbohrung des Ausstoßkolbens in einer Führungsbohrung angeordnet ist und nur teilweise in die Führungsbohrung des Ausstroßkolbens hineinragt, wobei die Mischkammer in Achsrichtung des Drehschiebers zum verbleibenden Bereich der Führungsbohrung des Ausstoßkolbens stets eine Öffnung aufweist.

Dadurch wird erreicht, daß die Eintrittsöffnungen bei entsprechender Stellung des Drehschiebers unmittelbar in die Mischkammer öffnen, also keine Reinigungsstößel erforderlich sind. Besonders vorteilhaft ist, daß in Mischstellung die im Drehschieber angeordnete Mischkammer unter einem Winkel zur Führungsbohrung des Ausstoßkolbens steht. Da der Durchmesser des Drehschiebers größer ist als die Breite der Führungsbohrung des Ausstoßkolbens, ist in der besagten Stellung ein Teil der stirnseitigen Öffnung der Mischkammner durch die innere Gehäusewandung abgedeckt, so daß die Austrittsöffnung der Mischkammer eine Drosselstelle darstellt. Dadurch wird eine besonders gute Nachvermischung erzielt. Da sich andererseits die Führungsbohrung des Ausstoßkolbens unterhalb des Drehschiebers sofort wieder erweitert, findet sogleich anschließend eine Strömungsberuhigung statt, womit ein erwünschtes laminares Einströmen des Reaktionsgemisches in den meist nachgeordneten Formhohlraum eines Formwerkzeuges verbunden ist.

Man wird die Endpunkte der Hubbewegung des Ausstoßkolbens so festlegen, daß einer direkt oberhalb des Drehschiebers liegt und den anderen läßt man mit dem Ende der Führungsbohrung, d.h. deren Auslaßöffnung, zusammenfallen.

Der Abstand der Ausläßöffnung vom Drehschieber ist in vernünftigen Grenzen frei wählbar. Er sollte einerseits so groß sein, daß die turbulent aus der Mischkammer austretende Strömung ausreichend beruhigt wird, aber andererseits nicht zu groß, damit der relativ schlanke Ausstoßkolben im Falle von Verklebungen mit der Wandung der Führungsbohrung nicht knicken kann. Der Drehschieber ist also in drei Stellungen bewegbar: die Mischstellung, die Reinigungsstellung und die Rücklaufstellung. Man wird jedoch in Anlehnung an bekannte Ausstoßkolbenmischköpfe die Geometrie derart wählen, daß die Rücklaufstellung mit der Reinigungsstellung zusammenfällt.

Vorzugsweise weisen der Ausstoßkolben und seine Führungsbohrung rechteckigen Querschnitt auf und die Mischkammer ist entsprechend gestaltet.

Diese Gestaltung ist fertigungstechnisch am günstigsten. Es sind aber auch andere Querschnittsformen möglich, wie beispielsweise kreisförmig, elliptisch, dreieckförmig, zwei sich schneidende Kreisquerschnitte oder zwei über einen Kanal verbundene Kreisquerschnitte usw. Alle diese Ausführungsformen sind auch für die Bildung der Drosselstelle bzw. für deren besondere Gestaltung von Einfluß.

In der Zeichnung ist die neue Vorrichtung in einem Ausführungsbeispiel rein schematisch dargestellt und nachstehend näher erläutert. Es zeigen:

Fig. 1 die Vorrichtung im Schnitt gemäß Linie A—B in Fig. 2,

Fig. 2 die Vorrichtung im Schnitt gemäß Linie C—D in Fig. 1,

Fig. 3 die Vorrichtung im Schnitt gemäß Linie E—F in Fig. 1,

Fig. 4 einen Schnitt gemäß Linie G—H in Fig. 1 in vergrößerter Darstellung, und zwar mit dem Drehschieber in Mischstellung,

Fig. 5 den gleichen Schnitt wie in Fig. 4, jedoch mit dem Drehschieber in Rücklaufstellung,

Fig. 6 einen Schnitt gemäß Linie I—K in Fig. 1 in vergrößerter Darstellung, und zwar mit dem Drehschieber in Mischstellung,

Fig. 7 den gleichen Schnitt wie in Fig. 6, jedoch mit dem Drehschieber in Rücklaufstellung, und

Fig. 8 bis 12 verschiedene weitere Ausführungsformen von Ausstoßkolben und Führungsbohrung sowie der Mischkammer bezüglich ihres Querschnittes.

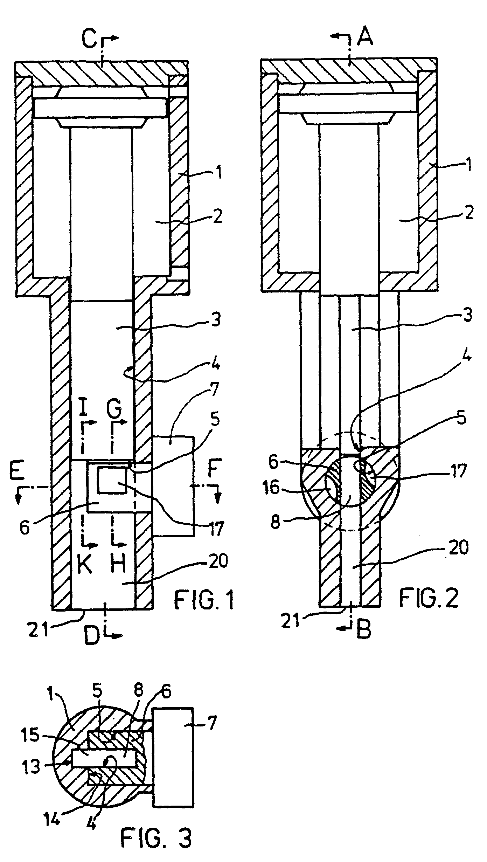

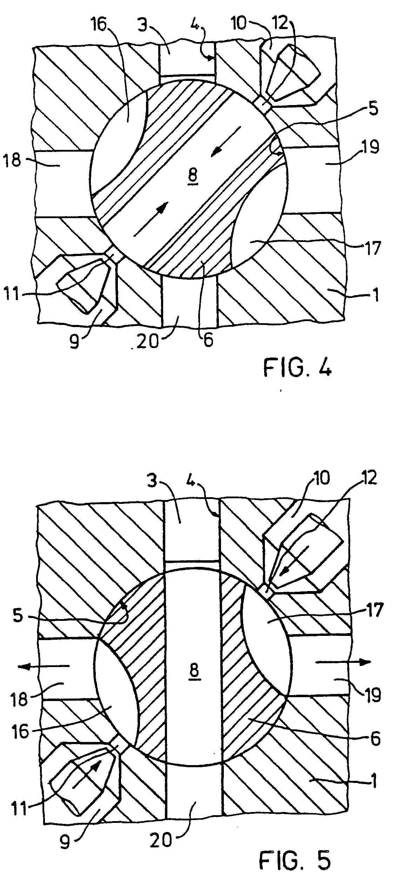

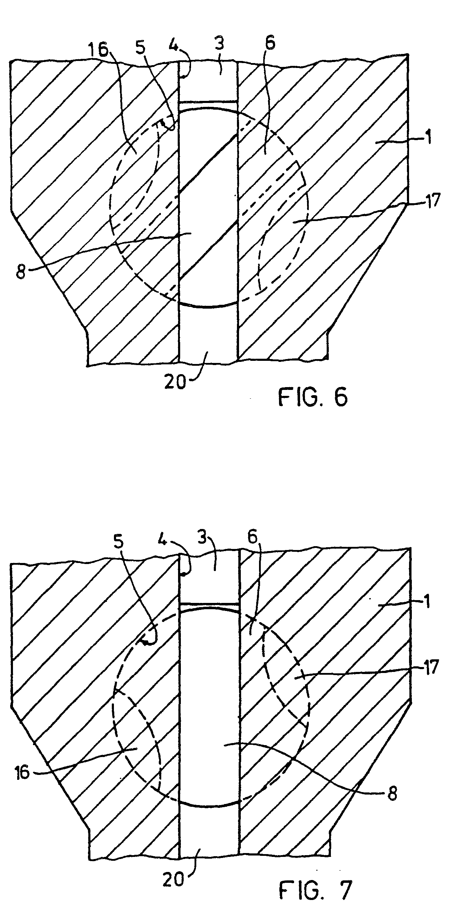

In Fig. 1 bis 7 ist in einem Gehäuse 1 ein mittels eines hydraulischen Antriebs 2 bewegbarer Ausstoßkolben 3 in einer Führungsbohrung 4 angeordnet. Quer zur Führungsbohrung 4 ist eine zweite Führungsbohrung 5 vorgesehen, in welcher ein Drehschieber 6 gelagert ist. Der Drehschieber 6 ist it einem Drehantrieb 7 versehen und reicht mit seiner Führungsbohrung 5 nur teilweise in die Führungsbohrung 4 hinein. Die Führungsbohrung 4 besitzt ebenso wie der zugehörige Ausstoßkolben 3 rechteckigen Querschnitt, mit der größten Querschnittsausdehnung parallel zur Achsrichtung des Drehschiebers 6. Der Drehschieber 6 weist eine einschnittartige Ausnehmung auf, welche eine Mischkammer 8 darstellt und sich in entsprechender Stellung (Reinigungsstellung) der Führungsbohrung 4 derart anpaßt, daß der Ausstoßkolben 3 durch die Mischkammer 8 geschoben werden kann und sie dabei vollständig ausfüllt. Von der Seite her weisen Zuleitungen 9, 10 mit Eintrittsöffnungen 11, 12 in die Führungsbohrung 4, und zwar sind sie derart angeordnet, daß sie in einer entsprechenden Stellung des Drehschiebers 6 gegeneinander in die Mischkammer 8 weisen. In dieser Stellung ist die Mischkammer 8 nur an der Stirnseite 13 des Drehschiebers 6 zur Führungsbohrung 4 hin offen. Da diese Stirnseite 13 teils durch die korrespondierende Stirnseite 14 des Gehäuses 1 abgedeckt ist und die Austrittsöffnung 15 der Mischkammer 8 wesentlich kleiner als die gesamte stirnseitige Austrittsöffnung 15 der Mischkammer 8 ist, stellt diese verbleibende Austrittsöffnung 15 in Mischstellung gleichzeitig eine erwünschte Drosselstelle dar. In Rücklaufstellung verbindet der Drehschieber 6 die Eintrittsöffnungen 11, 12 über Überströmkanäle 16, 17 mit Rücklaufleitungen 18, 19. In dieser Stellung fluchtet die Mischkammer 8 exakt mit der Führungsbohrung 4, so daß der Ausstoßkolben 3 zum Zwecke der Reinigung durch mit Mischkammer 8 hindurch und durch den als Auslaufbohrung 20 dienenden Abschnitt der Führungsbohrung 4 bis zur Auslauföffnung 21 hin fahren kann.

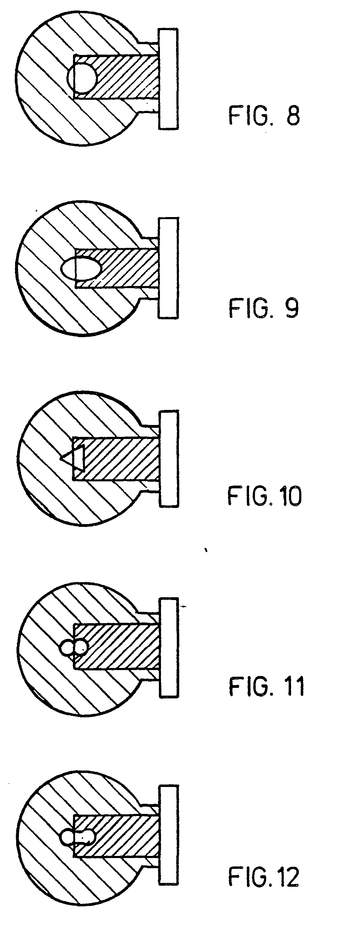

Die Querschnittdarstellungen in Fig. 8 bis 12 sprechen für sich und bedürfen keiner Erläuterung. Je nach dem, ob die Vorrichtung ständig oder überwiegend zur Vermischung eines schwer mischbaren Systems verwendet werden soll, ist aufgrund der durch die Querschnitte gegebenen Strömungsverhältnisse die eine oder andere Querschnittsform besser geeignet. Dies muß durch Experimente ermittelt werden.

**Patentansprüche**

1. Vorrichtung zum Herstellen eines massiven oder geschäumten Kunststoff bildenden Reaktionsgemisches aus fließfähigen Komponenten, bestehend aus einem Gehäuse (1) mit einer darin angeordneten Führungsbohrung (4) für einen Ausstoßkolben (3), wobei Zuleitungen (9, 10) mit Eintrittsöffnungen (11, 12) und Rückführleitungen (18, 19) vorgesehen sind; und aus einem Drehschieber (6), welcher eine vom Ausstoßkolben (3) durchfahrbare Mischkammer (8) enthält und aus eine die Eintrittsöffnungen (11, 12) zur Mischkammer (8) freigebenden in eine Eintrittsöffnungen (11, 12) über im Drehschieber (6) angeordnete Überströmkanäle (16, 17) mit den Rückführleitungen (18, 19) verbindende Stellung bewegbar ist, dadurch gekennzeichnet, daß der Drehschieber (6) unter einem Winkel zur Führungsbohrung (4) des Ausstoßkolbens (3) in einer Führungsbohrung (5) angeordnet ist und nur teilweise in die Führungsbohrung (4) des Ausstoßkolbens (3) hineinragt, wobei die Mischkammer (8) in Achsrichtung des Drehschiebers (5) zum verbleibenden Bereich der Führungsbohrung (4) des Ausstoßkolbens (3) stets eine Öffnung (15) aufweist.

2. Vorrichtung nach Anspruch 1, dadurch gekennzeichnet, daß der Ausstoßkolben (3) und seine Führungsbohrung (4) reckteckigen Querschnitt aufweisen und daß die Mischkammer (8) entsprechend gestaltet ist.

**Revendications**

1. Dispositif de fabrication d'un mélange de réaction de composants fluidisés formant un plastique massif ou mousse, constitué d'un carter (1) présentant un alésage de guidage (4), disposé à l'intérieur, pour un piston d'éjection (3), des conduites d'amenée (9, 10) présentant des ouvertures d'entrée (11, 12) et des conduites de retour (18, 19); ainsi que d'un tournant (6) contenant une chambre de mélange (8) que peut traverser le piston d'éjection (3) et pouvant passer d'une position qui libère les ouvertures (11, 12) d'entrée dans la chambre de mélange (8) dans une position qui, par l'intermédiaire de canaux de tropplein disposés dans le tournant (6), relie les ouvertures d'entrée (11, 12) avec les conduites de retour (18, 19), caractérisé en ce que le tournant (6) est disposé dans un alésage de guidage (5) sous un certain angle par rapport à l'alésage de guidage (4) du piston d'éjection (3) et ne pénètre que partiellement dans l'alésage de guidage (4) du piston d'éjection (3), la chambre de mélange (8) présentant toujours, dans la direction de l'axe du tournant (5), une ouverture (15) avec la zone restante de l'alésage de guidage (4) du piston d'éjection (3).

2. Dispositif selon la revendication 1, caractérisé en ce que le piston d'éjection (3) et son alésage de guidage (4) présentent une section rectangulaire et en ce que la chambre de mélange (8) a une structure correspondante.

**Claims**

1. Device for the production from fluid components of a reaction mixture forming solid or foamed plastic, consisting of a casing (1) with a guide bore (4) arranged in it for an ejector piston (3) and provided with feed lines (9, 10) with admission orifices (11, 12) and return lines (18, 19); and of a rotary slide valve (6), which contains a mixing chamber (8) through which the ejector piston (3) can pass, and is movable from a position opening the admission orifices (11, 12) into the mixing chamber (8) to a position connecting the admission orifices (11, 12) with the return lines (18, 19) via transfer ports (16, 17) arranged in the rotary slide valve (6), characterized in that the rotary slide valve (6) is arranged in a guide bore (5) at an angle to the guide bore (4) of the ejector piston (3) and only partly projects into the guide bore (4) of the ejector piston (3), and that the mixing chamber (8) always has an opening (15) in the axial direction of the rotary slide valve (5) to the remaining region of the guide bore (4).

2. Device according to Claim 1, characterized in that the ejector piston (3) and its guide bore (4) have rectangular cross-section and that the mixing chamber (8) is shaped correspondingly.

C

A

1

2

1

2

3

3

4

4

7

5

5

I   G

E

F

6

16

8

17

6

17

20

K   H

20

FIG. 1

FIG. 2

21   D

21   B

1   5   8   6

15

7

13

14   4

FIG. 3

1

FIG. 4

FIG. 5

FIG. 6

FIG. 7

FIG. 8

FIG. 9

FIG. 10

FIG. 11

FIG. 12